Europäisches Patentamt

European Patent Office

Office européen des brevets

(19)

(11) **EP 0 552 102 B1**

(12)

# FASCICULE DE BREVET EUROPEEN

(45) Date de publication et mention
de la délivrance du brevet:
**03.04.1996 Bulletin 1996/14**

(51) Int Cl.⁶: **G01T 1/20**, G03F 1/14

(21) Numéro de dépôt: **93400078.7**

(22) Date de dépôt: **14.01.1993**

(54) **Scintillateur très résistant et son procédé de fabrication**

Widerstandsfähiger Szintillator und sein Herstellungsverfahren

Sturdy scintillator and method of producing the same

(84) Etats contractants désignés:
**DE FR GB IT NL SE**

(30) Priorité: **17.01.1992 FR 9200439**

(43) Date de publication de la demande:
**21.07.1993 Bulletin 1993/29**

(73) Titulaire: **CRISMATEC S.A.**
**F-92400 Courbevoie (FR)**

(72) Inventeurs:
- **Bouissou, Claude**
  **F-77140 Saint-Pierre-Les-Nemours (FR)**
- **Baron, Claude**
  **F-77140 Nemours (FR)**

(74) Mandataire: **Breton, Jean-Claude et al**
**SAINT-GOBAIN RECHERCHE**
**39, quai Lucien Lefranc**
**F-93303 Aubervilliers (FR)**

(56) Documents cités:
**EP-A- 0 402 035**          **GB-A- 2 198 448**
**US-A- 3 857 036**

# Description

L'invention concerne le domaine des scintillateurs à cristaux, en particulier ceux qui utilisent un cristal en halogénures alcalins tels que NaI(Tl) et plus spécialement ceux qui présentent une bonne tenue aux chocs et aux températures extrêmes.

Pour détecter les rayonnements invisibles, lumière de très courte longueur d'onde (rayons γ) ou rayonnements électroniques, on utilise couramment des cristaux qui transforment ces rayonnements en photons de longueur d'onde plus longue qui peuvent être détectés et mesurés (en général par comptage) avec des photo-multiplicateurs traditionnels.

Ces appareils appelés scintillateurs sont utilisés en particulier pour la prospection pétrolière où, associés à des outils de forage, ils permettent de recueillir des informations sur les terrains traversés.

Ces conditions d'utilisation très rigoureuses et en particulier les températures élevées et les chocs très violents auxquels sont soumis les scintillateurs nécessitent des conceptions de ces appareils adaptées de manière à leur permettre de subir ces températures et ces chocs sans dégradations et en particulier sans que leurs caractéristiques de réponse soient modifiées.

Les scintillateurs habituels sont constitués de quatre éléments principaux, un boîtier, une fenêtre, un cristal et un réflecteur. Le boîtier est cylindrique en acier inoxydable avec une ouverture à chaque extrémité, d'un côté elle est obturée par une fenêtre en verre, frettée ou collée dans l'ouverture, c'est contre cette fenêtre, à l'extérieur, que sera placé le photo-multiplicateur destiné à détecter les photons émis dans le cristal. Le cristal lui-même est fait d'un matériau qui scintille sous l'effet des rayonnements ionisants, en général un halogénure de métal alcalin ou alcalino-terreux de préférence un iodure comme par exemple l'iodure de sodium dopé au thallium NaI (Tl). Sa forme est également cylindrique, ses surfaces sont polies. L'une de ses extrémités planes est en général jointe optiquement à la fenêtre, par exemple, à l'aide d'une résine silicone et sur ses autres faces, face latérale cylindrique et deuxième extrémité plane, il est équipé de réflecteurs qui recueillent la lumière émise et la rediffusent vers la fenêtre et le photo-multiplicateur situé derrière elle. L'extrémité du cylindre opposée à la fenêtre est fermée de manière étanche.

Dans les scintillateurs conçus spécialement pour résister aux hautes températures et aux chocs, comme par exemple dans celui décrit dans la demande de brevet français FR 2 356 957, on a prévu, à l'arrière du cristal, un élément élastique déformable qui maintient le contact optique entre le cristal et la fenêtre, même lorsqu'un choc agissant sur la masse du cristal, tend à l'écarter de la fenêtre.

En ce qui concerne la face latérale, cylindrique, du cristal, il convient ici aussi de maintenir un contact étroit entre cette surface et le réflecteur. La demande de brevet britannique GB 2 084 169 et la demande de brevet européen EP-A-0 402 035 prévoient une très mince couche faite d'une bande de matière plastique en polytétrafluoroéthylène (PTFE), elle sert de lubrifiant tandis qu'entre cette bande et la paroi intérieure du cylindre métallique, l'espace est rempli d'une poudre fine en alumine ou oxyde de magnésium. De plus, à l'arrière, le système élastique est renforcé grâce à l'utilisation de rondelles-ressorts qui appuient fortement sur le cristal. Le système de protection latérale décrit dans la demande de brevet français FR 2 356 957 prévoit, lui, une liaison entre l'intérieur du cylindre métallique et le cristal qui est constituée d'un élastomère silicone. Ce manchon transparent, éventuellement chargé de poudre comporte de multiples excroissances au contact du cristal et, entre celles-ci, un remplissage avec une poudre telle que de l'alumine.

Dans une autre proposition de solution, celle de la demande de brevet français FR 2 638 238, on préconise d'autoriser une mobilité longitudinale plus grande du cristal de manière à permettre en cas de choc, une séparation matérielle entre celui-ci et le matériau qui sert normalement de joint optique avec la fenêtre, le contact optique étant automatiquement rétabli grâce aux ressorts de rappel dès que l'accélération disparaît.

Les systèmes précédents pris isolément ou éventuellement en combinaison donnent en général satisfaction dans la gamme de températures souhaitée (jusqu'à 150°C) et pour des accélérations importantes, jusqu'à 150 fois celle de la pesanteur (≤ 150 g). Cependant lorsque les chocs sont plus violents, s'ils provoquent par exemple une accélération de 500 g, les scintillateurs ne résistent plus et l'on constate en général des décollements soit aux interfaces fenêtre-joint optique ou joint optique-cristal soit sur les autres faces du cristal au contact du réflecteur. De tels décollements modifient les caractéristiques optiques du scintillateur et la réponse du photo-multiplicateur correspondant à un signal donné n'est plus la même.

Le but de l'invention est de fournir un scintillateur qui ne présente pas les inconvénients précédents pour des accélérations élevées jusqu'à des valeurs de l'ordre de 700 g et pour des températures qui atteignent 180°C. L'invention entend également fournir le procédé de fabrication d'un tel scintillateur.

Selon l'invention, ce but est atteint grâce à un scintillateur utilisant un détecteur en cristal d'halogénure alcalin ou alcalino-terreux pour la détection des rayonnements ionisants et comportant un boîtier, une fenêtre transparente à une des extrémités du boîtier, un joint optique entre la fenêtre et l'une des faces planes du cristal, comportant également sur les autres parois du cristal un matériau réflecteur blanc diffusant, de préférence à base de polytétrafluoroéthylène, le cristal étant pressé contre le joint optique et celui-ci contre la fenêtre grâce à des ressorts situés à l'extrémité du boîtier opposée à la fenêtre et dans lequel le matériau réflecteur est sous forme de poudre frittée.

Dans ce scintillateur, les ressorts agissent sur le matériau réflecteur par l'intermédiaire d'un dispositif qui répartit les efforts dans la poudre frittée, la force qu'ils produisent sur le cristal est au moins égale aux trois-quarts de la force maximum subie par le cristal dans ses conditions d'emploi extrêmes.

Le procédé de réalisation du scintillateur de l'invention utilise une mise en oeuvre du matériau réflecteur qui comporte après sélection d'une poudre de polytétrafluoroéthylène d'une granulométrie essentiellement inférieure à 1 mm et son séchage, les trois étapes suivantes :

a.

- introduction d'une quantité de poudre à la périphérie du cristal maintenu en pression sur le joint optique,
- pressage de la poudre déjà introduite,
- répétition des opérations précédentes jusqu'a remplissage de la périphérie du cristal,

b.

- introduction d'une quantité de poudre répartie sur le fond du cristal,
- pressage de la poudre déjà introduite,
- répétition des opérations précédentes jusqu'à l'obtention d'une épaisseur finale de l'ordre de 1,5 mm,

c.

- frittage à une température supérieure à la température maximum d'utilisation du scintillateur et à des pressions progressant par paliers jusqu'à une valeur qui permet d'exercer sur le cristal, dans la direction de son axe, une force supérieure à $m.\gamma$ où $m$ est la masse du cristal et $\gamma$ l'accélération maximum d'utilisation du scintillateur.

Grâce à la solution proposée par l'invention, les scintillateurs correspondants possèdent une gamme d'emploi très élargie par rapport aux scintillateurs réalisés auparavant. Ainsi ils peuvent subir sans dommage de nombreux cycles thermiques entre des températures très basses (jusqu'à - 55°C) et des températures très élevées (jusqu'à + 150°C).

De même des chocs multiples à des accélérations importantes (jusqu'à plus de 700 g) ne provoquent aucune détérioration. En particulier, malgré ces conditions d'essai très brutales, les indications fournies par un photo-multiplicateur donné associé au scintillateur lorsqu'il est soumis à un rayonnement ionisant donné d'intensité définies sont peu différentes avant et après les sollicitations en température et au choc.

Parmi les figures qui servent à illustrer l'invention, la figure 1 représente un scintillateur conforme à l'invention, la figure 2 montre l'une des phases de la réalisation d'un scintillateur et la figure 3 est la représentation d'un dispositif de mise en oeuvre du procédé de l'invention.

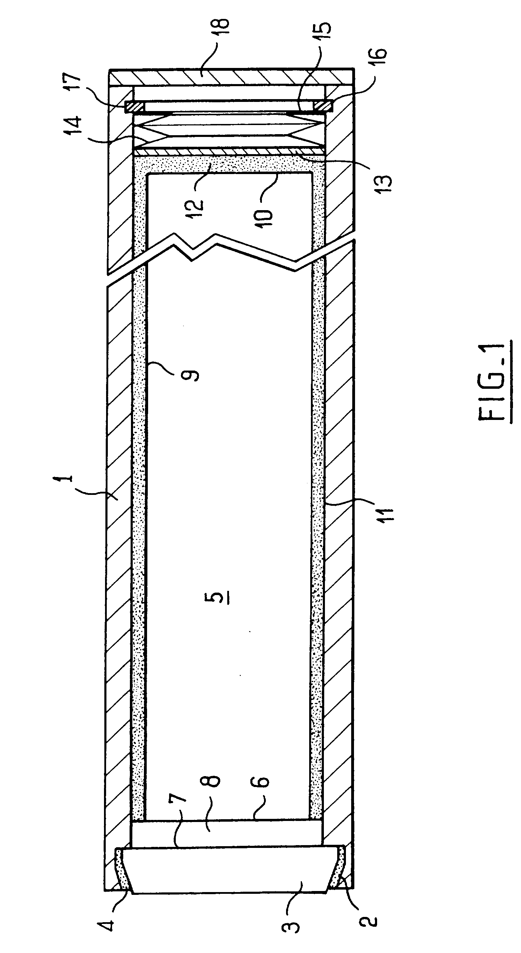

Sur la figure 1, le scintillateur de l'invention comporte une enveloppe cylindrique 1 en acier inoxydable. Il s'agit par exemple d'un cylindre de 47 mm de diamètre intérieur et d'une longueur de 127 mm. La paroi du cylindre a une épaisseur d'environ 2 mm. A une extrémité du cylindre, on a prévu un logement 2 dans lequel vient s'insérer une fenêtre circulaire 3 en verre poli, il s'agit par exemple d'un verre 801-51 de la Société Corning. Les faces de la fenêtre sont planes et parallèles, elles ont subi un poli optique. L'épaisseur est de 8 mm. Entre le verre 3 et l'enveloppe cylindrique 1, un élastomère transparent 4 par exemple un mastic silicone assure l'étanchéité. la partie active du scintillateur est le détecteur 5. Il s'agit d'un cristal cylindrique (dimensions d'origine : diamètre 43 mm, longueur 97 mm) par exemple en iodure de sodium dopé au thallium NaI(Tl). Les faces du cristal sont soigneusement polies. Ses extrémités sont des surfaces planes. L'extrémité avant 6 est séparée de la surface arrière 7 de la fenêtre par ce qu'on appelle "un joint optique" 8. Il s'agit d'une résine silicone transparente. En permanence, par sa face avant 6, grâce à des moyens mécaniques qui seront décrits plus loin, le cristal 5 est pressé sur le joint optique 8 qui est lui-même pressé sur la face arrière 7 de la fenêtre. Sur toutes ses autres faces, face latérale cylindrique 9 et extrémité plane 10, le cristal 5 est enrobé de poudre de PTFE frittée in situ (11, 12) par une méthode qui sera décrite plus loin. A l'arrière de la matière PTFE frittée 12 se trouve une plaque d'appui métallique en forme de disque 13. La plaque 13 exerce en permanence une pression sur le PTFE 11, 12 et donc sur tous les éléments qui lui font suite : cristal 5, joint optique 8 et face arrière 7 de la fenêtre 3. Les moyens mécaniques de pressage sont des rondelles-ressorts 14 du type CRIBO (diamètre extérieur 40 mm, intérieur 14 mm, épaisseur 1,5 mm) qui sont, dans le cas de la figure, au nombre de 3, elles pressent d'un côté sur la plaque 13 et de l'autre sur une rondelle rigide 15, elle-même en appui sur un circlip 16 placé dans un logement 17 prévu dans la paroi du cylindre 1. Le boîtier est finalement fermé par une plaque 18 faite du même matériau que lui. Cette plaque est soudée de manière parfaitement étanche après que l'espace interne ait été rempli d'un gaz inerte sec tel que l'azote par exemple. Au fond de la plaque 18, du côté extérieur, est prévu un moyen de fixation mécanique de l'ensemble qui n'est pas représenté sur la figure.

Le scintillateur qui vient d'être décrit n'est qu'un exemple de réalisation, l'invention couvre également des scintillateurs avec des proportions différentes, avec des cristaux autres mais conservant des moyens équivalents pour remplir les mêmes fonctions que dans la description qui précède.

La méthode utilisée pour réaliser des scintillateurs du type de celui qu'on vient de décrire comprend deux étapes principales, l'enrobage du cristal et son conditionnement.

L'enrobage du cristal s'effectue dans une installation à atmosphère contrôlée, soit en présence d'azote sec, ou d'un autre gaz inerte, soit en présence d'air sec. On utilise par exemple une boîte à gants. Les premières étapes de la fabrication sont celles des scintillateurs déjà connus : insertion et collage de la fenêtre, coulée de la résine constituant le joint optique, polymérisation de cette résine et enfin mise en place du cristal sur le joint optique après centrage.

L'enrobage proprement dit du cristal dans une poudre d'un matériau pulvérulent frittable tel que le PTFE nécessite l'utilisation de deux outils spécialisés qui permettent de presser la poudre : l'un est un tube cylindrique usiné dans du PTFE massif et l'autre un cylindre plein en acier inoxydable. Le diamètre extérieur de ces deux outils est le même, ils s'ajustent exactement à l'intérieur du boîtier en acier inoxydable. Ces outils, chargés dans la direction de leur axe peuvent ainsi exercer une pression importante sur la poudre pour en réaliser le frittage. La nature de la matière constituant cette poudre est telle qu'elle fournisse au produit fritté un module d'élasticité de l'ordre de 400 mégapascals et qu'il soit de couleur blanche et reste diffusant. Le polytétrafluoréthylène (PTFE) réunit ces caractéristiques.

Dans le cas du PTFE la poudre a de préférence une granulométrie inférieure à 1 mm, elle est par exemple comprise entre 0,25 et 1 mm avec peu de fines. Elle doit être soigneusement séchée, par exemple pendant plus de 2 heures, à une température de 230°C. Après séchage, elle est stockée dans la boîte à gants.

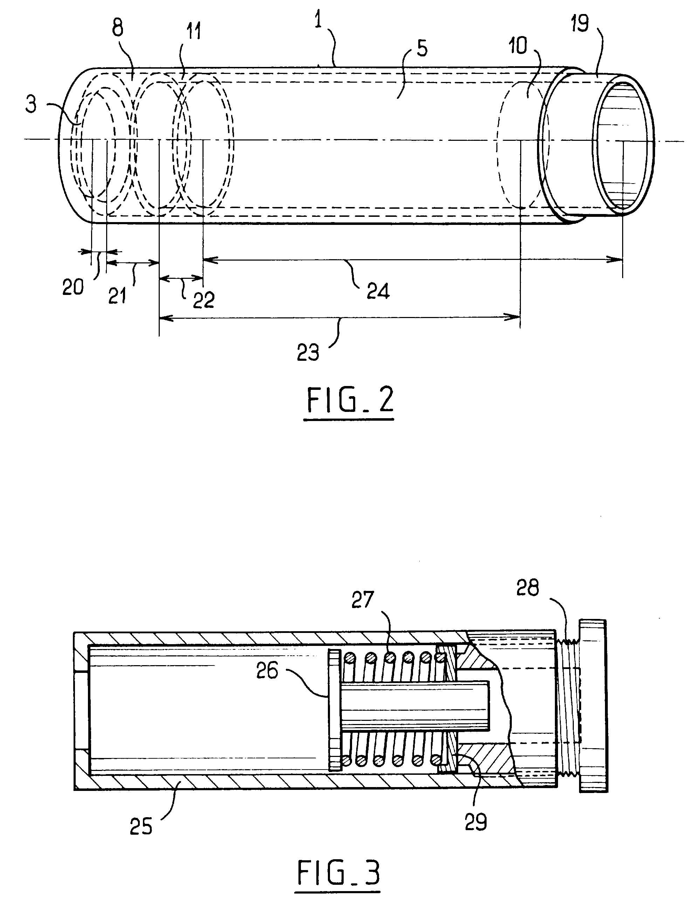

Le premier stade de l'enrobage s'effectue à l'aide du dispositif représenté figure 2. On voit sur la figure le boîtier 1 déjà équipé de sa fenêtre 3 et de son joint optique 8 sur lequel est placé le cristal 5. L'ensemble est placé verticalement et une pression est exercée sur le cristal, dans la direction de son axe à l'aide d'un dispositif non représenté pour éviter qu'il ne bouge ni qu'il ne se décolle du joint optique.

On effectue alors un premier remplissage de l'espace périphérique 11 du cristal sur une hauteur de 10 mm environ et l'on presse chaque fois jusqu'à une pression supérieure à 3500 hectopascals et de préférence jusqu'à une valeur d'environ 3900 hectopascals grâce au tube cylindrique 19. L'opération est répétée plusieurs fois jusqu'à ce que la matière PTFE pressée atteigne la face supérieure 10 du cristal. Un dernier pressage est alors effectué à environ 7500 hectopascals.

Sur la figure 2, la référence 20 représente l'épaisseur de la fenêtre, 21 celle du joint optique, 22 la hauteur de PTFE déjà pressé. 24 représente la longueur du tube cylindrique presseur 19 et, 23 celle du cristal.

Le deuxième stade de l'enrobage concerne le réflecteur arrière du cristal. Le principe est le même que pour la périphérie, seul l'outil, un poinçon cylindrique et la pression sont différents : la pression exercée après chaque ajout de poudre sur une hauteur de l'ordre de 1 mm est supérieure à 7000 et de préférence de l'ordre de 7500 hectopascals et l'opération de remplissage s'arrête lorsque l'épaisseur pressée est suffisante (par exemple 4 mm dans le cas du scintillateur de la figure 1). Un dernier pressage est effectué à une pression supérieure de l'ordre de 8500 hectopascals, par exemple 8300 hectopascals.

La deuxième étape de la fabrication du scintillateur selon l'invention peut alors être réalisée. Il s'agit du conditionnement du cristal pour lequel on utilise le dispositif de la figure 3. Celui-ci est constitué essentiellement d'un cylindre en acier 25 destiné à recevoir le scintillateur, d'un piston 26 destiné à presser l'ensemble du cristal 5 et du réflecteur périphérique 11, 12 lors de séjours à températures élevées. La pression est exercée grâce à un ressort taré 27 sur lequel agit la vis 28 par l'intermédiaire du plateau 29. Un étalonnage préliminaire a permis de déterminer la force correspondant à un nombre de tours de vis donné et donc la pression qui en découle sur l'ensemble cristal-réflecteur.

Le conditionnement consiste à soumettre le scintillateur simultanément à des pressions internes et à des températures élevées. Cela en plusieurs étapes, à des pressions de plus en plus fortes, les phases de charge en température élevée étant séparées par des pauses sous charge mais à température ambiante.

Les étapes sont par exemple au nombre de 4, successivement :

11100 hectopascals à 185°C pendant 24 heures,
14100 hectopascals à 185°C pendant 24 heures,
16900 hectopascals à 185°C pendant 24 heures,
et 19700 hectopascals à 185°C pendant 24 heures.

A la fin de l'opération, une fois l'ensemble revenu à la température ambiante, on procède à la mise sous charge définitive et à la fermeture du boîtier après l'avoir rempli de l'atmosphère d'azote prévue. La charge permanente définitive, ajustée en fonction de la nature et du nombre de rondelles-ressorts 14 et du jeu laissé, est par exemple de 15000 hectopascals.

Lorsqu'on vérifie le scintillateur réalisé dans les conditions précédentes, on mesure le signal fourni par un photo-multiplicateur PM 2102 E et par un photo-multiplicateur PM 9727 B en présence d'une source de Cs 137, avant et après 3 cycles thermiques de 8 heures de - 55°C à + 150°C.

Les résultats trouvés, exprimés en pourcentages sont les suivants :

|  | avant | après |
|---|---|---|
| PM 2102 E latéral | 9,9 % | 9,4 % |
| PM 9727 B latéral | 14,8 % | 14,7 % |

Ces résultats qui, les uns comme les autres correspondent aux spécifications des utilisateurs montrent une très bonne stabilité après les cycles thermiques. Par ailleurs, on ne constate aucune modification de l'aspect du cristal lorsqu'on l'observe au travers de la fenêtre. De même, des essais de chocs jusqu'à 700 g ont montré une évolution insignifiante de la résolution avant et après les tests et aucun changement d'aspect. En comparaison, les scintillateurs réalisés avec les méthodes traditionnelles montrent après les tests précédents, au moins des décollements entre le cristal et sa fenêtre et même, lors d'essais de choc, des casses des cristaux avec évidemment comme conséquence, une dégradation inacceptable du signal fourni par le photo-multiplicateur lorsqu'il est soumis à un rayonnement ionisant donné.

La méthode de fabrication du scintillateur selon l'invention qui vient d'être donnée n'est qu'un exemple, on ne sortirait pas du cadre de l'invention si l'on changeait les dimensions ou les valeurs des paramètres précédents. Un ordre de grandeur doit être cependant respecté : il importe, si l'on veut résister à une accélération $\gamma$ donnée, d'exercer lors du conditionnement du cristal, une force du même ordre que celle à laquelle il sera soumis lors de l'accélération en question. Ainsi, avec le cristal de NaI(Tl) représenté figure 1 qui est destiné à supporter des accélérations de l'ordre de 700 g (g, accélération de la pesenteur : 9,8 m/sec$^2$) et qui a une masse de 510 grammes, la pression maximale qui s'exerce sur lui (19700 hectopascal, soit 20,1 kgf/cm$^2$, correspond - étant donnée la surface du piston 26 qui est de 17,7 cm$^2$ - à une force :

$$f = P . S = 20,1 \times 17,7 = 355,8 \text{ kgf}$$

Soit :

$$9,8 \times 355,8 = 3704,4 \text{ newton}$$
l'accélération qui lui correspond dans la formule
$$f = m \gamma \text{ est :}$$

$$\gamma = \frac{f}{m} = \frac{3704,4}{0,510} = 7264 \text{ m/sec}^2$$
qui est supérieure à 700 g.

La technique de l'invention, limitée sur l'exemple à des accélérations de 700 g à cause des limites mécaniques dues à la déformation du boîtier, permet d'atteindre une tenue à des chocs encore plus violents, tels que par exemple à 1000 g, à condition de respecter la règle énoncée précédemment. Ainsi en supposant qu'on améliore la tenue mécanique du boîtier précédent en accroissant l'épaisseur de ses parois, on peut obtenir une tenue à 1000 g à condition de porter la pression, lors de la dernière phase du conditionnement du cristal à 27000 hectopascals (au lieu de 19700). De même, la pression permanente, obtenue par les rondelles-ressorts qui, d'une manière générale, permet d'exercer sur le cristal une force au moins égale aux trois-quarts de la force maximum subie par le cristal dans ses conditions d'emploi extrêmes, est également renforcée dans ce cas.

**Revendications**

1.  Scintillateur utilisant un détecteur en cristal d'halogénure alcalin ou alcalino-terreux pour la détection des rayonnements ionisants et comportant un boîtier, une fenêtre transparente à une des extrémités du boîtier, un joint optique entre la fenêtre et l'une des faces planes du cristal, comportant également sur les autres parois du cristal un matériau réflecteur blanc diffusant, le cristal étant pressé contre le joint optique et celui-ci contre la fenêtre grâce à des ressorts situés à l'extrémité du boîtier opposée à la fenêtre, **caractérisé en ce que** le matériau réflecteur (11, 12) est sous forme de poudre frittée.

2.  Scintillateur selon la revendication 1, **caractérisé en ce que** le matériau réflecteur est du polytétrafluoroéthylène.

3.  Scintillateur selon la revendication 1 ou la revendication 2, **caractérisé en ce que** les ressorts agissent sur le matériau réflecteur (12) par l'intermédiaire d'un dispositif (13) qui répartit les efforts dans la poudre frittée.

4.  Scintillateur selon la revendication 3, **caractérisé en ce que** l'action des ressorts sur le cristal produit une force au moins égale aux trois-quarts de la force maximum subie par le cristal dans ses conditions d'emploi extrêmes.

5.  Procédé de réalisation d'un scintillateur selon la revendication 2, **caractérisé en ce que** la mise en oeuvre du matériau réflecteur comporte après sélection d'une poudre de polytétrafluoroéthylène d'une granulométrie essentiellement inférieure à 1 mm et son séchage, les trois étapes suivantes :

    a.

    -   introduction d'une quantité de poudre à la périphérie du cristal maintenu en pression sur le joint optique,
    -   pressage de la poudre déjà introduite,
    -   répétition des opérations précédentes jusqu'au remplissage de la périphérie du cristal,

    b.

    -   introduction d'une quantité de poudre répartie sur le fond du cristal,
    -   pressage de la poudre déjà introduite,
    -   répétition des opérations précédentes jusqu'à l'obtention d'une épaisseur finale de l'ordre de 1,5 mm,

    c.

    -   frittage à une température supérieure à la température maximum d'utilisation du scintillateur et à des pressions progressant par paliers jusqu'à une valeur qui permet d'exercer sur le cristal, dans la direction de son axe, une force supérieure à m.γ où m est la masse du cristal et γ l'accélération maximum d'utilisation du scintillateur.

6. Procédé selon la revendication 5, **caractérisé en ce que** la hauteur de poudre introduite chaque fois lors de l'étape a) est de l'ordre de 10 mm.

7. Procédé selon la revendication 5 ou 6, **caractérisé en ce que** la pression exercée lors de l'étape a) est à chaque fois supérieure à 3500 hectopascals et finalement, de l'ordre de 7500 hectopascals.

8. Procédé selon l'une des revendications 5 à 7, **caractérisé en ce que** la hauteur de poudre introduite chaque fois lors de l'étape b) est de l'ordre de 1 mm.

9. Procédé selon l'une des revendications 5 à 8, **caractérisé en ce que** la pression exercée lors de l'étape b) est à chaque fois supérieure à 7000 hectopascals et finalement de l'ordre de 8500 hectopascals.

10. Procédé selon l'une des revendications 5 à 9, **caractérisé en ce que** la température de l'étape c) est supérieure à 150°C et de préférence de 185°C.

11. Procédé selon la revendication 10, **caractérisé en ce que** lors de l'étape c) chaque palier de la montée en pression a une durée d'au moins 12 heures et de préférence de 24 heures.

12. Procédé selon la revendication 11, **caractérisé en ce que** la pression du premier palier est de l'ordre de la moitié de la pression finale.

13. Procédé selon l'une des revendications 10 à 12, **caractérisé en ce que** les paliers sont au nombre de 4 et que leurs pressions croissent linéairement.

**Patentansprüche**

1. Szintillationszähler, in dem zur Bestimmung ionisierender Strahlung ein Szintillator aus einem Alkali- oder Erdalkalihalogenidkristall eingesetzt wird und welcher ein Gehäuse, an einem Gehäuseende ein transparentes Fenster, zwischen dem Fenster und einer der ebenen Seiten des Kristalls einen Lichtleiter und auch auf den anderen Wänden des Kristalls ein diffus reflektierendes weißes Material umfaßt, wobei der Kristall durch Federn, die sich am dem Fenster gegenüberliegenden Gehäuseende befinden, an den Lichtleiter und dieser an das Fenster gepreßt wird, **dadurch gekennzeichnet, daß** das reflektierende Material (11, 12) in Form eines gesinterten Pulvers vorliegt.

2. Szintillationszähler nach Anspruch 1, **dadurch gekennzeichnet, daß** das reflektierende Material Polytetrafluorethylen ist.

3. Szintillationszähler nach Anspruch 1 oder 2, **dadurch gekennzeichnet, daß** die Federn auf das reflektierende Material (12) über eine Einrichtung (13) wirken, welche die Kräfte im gesinterten Pulver verteilt.

4. Szintillationszähler nach Anspruch 3, **dadurch gekennzeichnet, daß** durch die Einwirkung der Federn auf den Kristall eine Kraft erzeugt wird, die wenigstens gleich drei Vierteln der Maximalkraft ist, welcher der Kristall unter härtesten Einsatzbedingungen ausgesetzt ist.

5. Verfahren zur Herstellung eines Szintillationszählers nach Anspruch 2, **dadurch gekennzeichnet, daß** die Verwendung des reflektierenden Materials nach Auswahl eines Polytetrafluorethylenpulvers mit einer Korngröße von im wesentlichen unter 1 mm und dessen Trocknung, die drei folgenden Stufen umfaßt:

   a.

- Einfüllen einer Pulvermenge am Umfang des Kristalls, der an den Lichtleiter angedrückt gehalten wird,
- Zusammenpressen des bereits eingefüllten Pulvers und
- Wiederholung der vorhergehenden Arbeitsgänge bis zur Füllung über den Umfang des Kristalls,

   b.

- Einfüllen einer Pulvermenge, die am Boden des Kristalls verteilt wird,
- Zusammenpressen des bereits eingefüllten Pulvers und
- Wiederholung der vorhergehenden Arbeitsgänge, bis eine Enddicke von etwa 1,5 mm erreicht ist, und

   c.

- Sintern bei einer Temperatur oberhalb der maximalen Einsatztemperatur des Szintillationszählers und bei Drücken, die sich stufenweise auf einen Wert erhöhen, der es erlaubt, auf den Kristall in Richtung seiner Achse eine Kraft auszuüben, die größer als m·γ ist, wobei m die Kristallmasse und γ die maximale Einsatzbeschleunigung des Szintillationszählers bedeutet.

**6.** Verfahren nach Anspruch 5, **dadurch gekennzeichnet, daß** während der Stufe a) die jedesmalige Höhe des eingefüllten Pulvers etwa 10 mm beträgt.

**7.** Verfahren nach Anspruch 5 oder 6, **dadurch gekennzeichnet, daß** der Druck, welcher während der Stufe a) ausgeübt wird, jedes Mal über 3500 Hektopascal und schließlich etwa 7500 Hektopascal beträgt.

**8.** Verfahren nach einem der Ansprüche 5 bis 7, **dadurch gekennzeichnet, daß** während der Stufe b) die jedesmalige Höhe des eingefüllten Pulvers etwa 1 mm beträgt.

**9.** Verfahren nach einem der Ansprüche 5 bis 8, **dadurch gekennzeichnet, daß** der Druck, welcher während der Stufe b) ausgeübt wird, jedes Mal über 7000 Hektopascal und schließlich etwa 8500 Hektopascal beträgt.

**10.** Verfahren nach einem der Ansprüche 5 bis 9, **dadurch gekennzeichnet, daß** die Temperatur in der Stufe c) mehr als 150 °C und vorzugsweise 185 °C beträgt.

**11.** Verfahren nach Anspruch 10, **dadurch gekennzeichnet, daß** während der Stufe c) jede Druckerhöhungsstufe wenigstens 12 Stunden und vorzugsweise 24 Stunden dauert.

**12.** Verfahren nach Anspruch 11, **dadurch gekennzeichnet, daß** der Druck der ersten Stufe etwa die Hälfte des Enddrucks beträgt.

**13.** Verfahren nach einem der Ansprüche 10 bis 12, **dadurch gekennzeichnet, daß** vier Druckerhöhungsstufen vorhanden sind, deren Drücke linear anwachsen.

**Claims**

**1.** Scintillator using a detector of alkaline or alkaline-earth halogenide crystal for the detection of ionising radiation and comprising a case, a transparent window at one of the ends of the case, an optical connection between the window and one of the plane faces of the crystal, also comprising on the other walls of the crystal a diffusing white reflective material, the crystal being pressed against the optical connection and the latter against the window thanks to springs situated at the end of the case opposite to the window, characterised in that the reflective material (11, 12) is in the form of sintered powder.

**2.** Scintillator according to claim 1, characterised in that the reflective material is polytetrafluoroethylene.

**3.** Scintillator according to claim 1 or claim 2, characterised in that the springs act on the reflective material (12) through the intermediary of a device (13) which distributes the forces in the sintered powder.

**4.** Scintillator according to claim 3, characterised in that the action of the springs on the crystal produces a force at least equal to three quarters of the maximum force subjected by the crystal in its extreme conditions of use.

**5.** Process for manufacture of a scintillator according to claim 2, characterised in that, after selecting a polytetrafluoroethylene powder of a granulometry essentially less than 1 mm and drying it, implementing the reflective material comprises the following three stages:

   a.

   - introducing a quantity of the powder at the periphery of the crystal which is held under pressure against the optical connection,
   - pressing the powder already introduced, repetition of the above operations until the periphery of the crystal is filled,

   b.

   - introducing a quantity of powder spread over the bottom of the crystal,
   - pressing the powder already introduced,
   - repetition of the above operations until a final thickness of the order of 1.5 mm is obtained.

   c.

   - sintering at a temperature in excess of the maximum utilisation temperature of the scintillator and at pressures progressing by stages up to a value which makes it possible to exert on the crystal, in the direction of its axis, a force exceeding $m.\gamma$ where m is the mass of the crystal and $\gamma$ the maximum acceleration of utilisation of the scintillator.

**6.** Process according to claim 5, characterised in that the height of the powder introduced each time during stage a) is of the order of 10 mm.

7. Process according to claim 5 or 6, characterised in that the pressure exerted during state a) is each time in excess of 3500 hectopascals and finally of the order of 7500 hectopascals.

8. Process according to any one of claims 5 to 7, characterised in that the height of the powder introduced each time during stage b) is of the order of 1 mm.

9. Process according to any one of claims 5 to 8, characterised in that the pressure exerted during stage b) is each time in excess of 7000 hectopascals and finally of the order of 8500 hectopascals.

10. Process according to any one of claims 5 to 9, characterised in that the temperature of stage c) is more than 150°C and preferably 185°C.

11. Process according to claim 10, characterised in that during stage c) each step of the rise in pressure has a duration of at least 12 hours and preferably 24 hours.

12. Process according to claim 11, characterised in that the pressure of the first step is of the order of half the final pressure.

13. Process according to any one of claims 10 to 12, characterised in that the steps are 4 in number and that their pressures increase in a linear manner.

FIG_1

FIG. 2

FIG. 3